# EUROPÄISCHE PATENTSCHRIFT

(11) **EP 0 982 466 B1**
(45) Veröffentlichungstag und Bekanntmachung des Hinweises auf die Patenterteilung: **08.05.2002**
(21) Anmeldenummer: 99114482.5
(22) Anmeldetag: 23.07.1999
(51) Int. Cl.: E06B 9/66

(54) **Wickeljalousie**
Roller shade
Store à rouleau

(30) Priorität: 29.07.1998 DE 19834081
(43) Veröffentlichungstag der Anmeldung: 01.03.2000
(73) Patentinhaber: Lock Antriebstechnik Freimut Lock, 88521 Ertingen (DE)
(72) Erfinder: Veit, Christoph, 88367 Hohentengen (DE)
(74) Vertreter: Patentanwälte Eisele, Otten, Roth & Dobler

(56) Entgegenhaltungen:
- DE-A- 3 843 917
- DE-A- 4 100 609
- DE-A- 19 732 686
- FR-A- 2 563 860
- GB-A- 521 216

## Beschreibung

Die Erfindung betrifft eine Wickeljalousie zur Lüftung und/oder Verdunklung von Gebäuden über eine oder mehrere an einer Gebäudewand an einem im wesentlichen senkrechten Dachelement oder dgl. vorgesehene Öffnung(en) nach dem Oberbegriff des Anspruchs 1.

### Stand der Technik

Derzeit sind verschiedene Jalousiesysteme unter Verwendung von flächigen, flexiblen Abdeckelementen zur Lüftung von Gebäuden, insbesondere Gewächshäusern, Ställen oder dergleichen bekannt.

Bei einer ersten Ausführungsform handelt es sich um eine Seitensenklüftung. Diese umfasst im Wesentlichen ein flächiges, flexibles Abdeckelement, vorzugsweise eine Gewebefolie, die über eine Seilzugvorrichtung, welche mit dem oberen Rand des Abdeckelements verbunden ist, zum Öffnen einfach nach unten abgesenkt wird. In der Regel erstreckt sich eine derartige Seitensenklüftung über den größten Teil der Wandhöhe eines Gewächshauses oder eines Stalles, so dass das Abdeckelement sich beim Absenken am Boden unkontrolliert aufstapelt. Bei diesem Stapelvorgang bilden sich regelmäßig sackartige Bereiche im Folienmaterial, in welchen sich in nachteiliger Weise Schmutz, Regenwasser und Eis sammeln können, die dann beim Schließen der Jalousie ins Innere des jeweiligen Gebäudes fallen. Durch das Aneinanderreiben des Jalousiematerials bei der Stapelbildung und aufgrund der Tatsache, daß die noch nicht abgesenkte Jalousie keine besondere Spannung aufweist und damit im Wind flattern kann, ist das Jalousiematerial überdies einem hohen Verschleiß ausgesetzt. Darüber hinaus erzeugt eine im Wind flatternde Jalousie eine unerwünschte Geräuschkulisse.

Um beim Öffnen der Jalousie keine unkontrolliert abgelegten Jalousiebereiche zu erhalten, wird bei einer anderen Ausführungsform, einer sogenannten Wickellüftung, die Jalousie von unten nach oben aufgewickelt. Diese Vorgehensweise hat jedoch den Nachteil, dass ein Luftaustausch zunächst im Bodenbereich bzw. im unteren Bereich des Gebäudeinneren stattfindet. Dies ist sowohl bei Gewächshäusern als auch bei Ställen nicht immer erwünscht. Insbesondere bei Ställen führt das öffnen der Stallwand zunächst im unteren Bereich häufig zu Zugluft bzw. einem Stallklima, das sich ungünstig auf das Wohlbefinden der im Stall gehaltenen Tiere auswirkt.

Um ein definiertes Öffnen der Jalousie von oben nach unten zu erreichen, wurde bei einer weiteren Ausführungsform das untere Ende der Jalousie festgelegt und die beim Absenken der Jalousie sich bildende Tasche mit z. B. einem Rohr beschwert. Diese Variante ist jedoch nur dann möglich, wenn die Wand eines Gebäudes nur über einen Teil der Wandhöhe geöffnet werden soll. Überdies kann sich in der mit dem Rohr beschwerten Tasche Schmutz und dergleichen ansammeln.

Aus der französischen Patentanmeldung FR-A-25 63 860 ist eine Wickeljalousie zur Verdunklung einer an einer Gebäudewand vorgesehenen Öffnung, umfassend ein flächiges flexibles Abdeckelement sowie ein von einer Antriebseinheit getriebenes Wickelelement, mit welchem beginnend am unteren Rand des Abdeckelements das Abdeckelement in dessen unterem Bereich aufwickelbar ist. Desweiteren besitzt diese Wickeljalousie eine Nachführeinheit, die abhängig vom Aufwickelfortschritt den oberen Rand des Wickelelements absenkt. Auf diese Weise wird nicht nur erreicht, dass die Wickeljalousie nicht nur von oben nach unten geöffnet wird, sondern auch, dass der abgesenkte Jalousiebereich definiert vom Wickelelement aufgenommen und durch das Zusammenwirken von Wickelelement und Nachführeinheit unter Spannung gehalten wird. Damit wird die Möglichkeit der Verschmutzung der Jalousie und ein Verschleiß durch ein Aneinanderreiben von Jalousiebereichen herabgesetzt, wodurch sich die Lebensdauer der Wickeljalousie erhöht. Darüber hinaus tritt bei der unter Spannung gehaltenen Jalousie kein Flattern im Wind auf, was im Hinblick auf einen Materialverschleiß vorteilhaft ist. Gegebenenfalls können jedoch in einem derartigen System hohe Zugspannungen auftreten, wenn das Absenken des Abdeckelements mit einer geringeren Geschwindigkeit als das Aufwickeln durchgeführt wird.

### Aufgabe und Vorteile der Erfindung

Der Erfindung liegt die Aufgabe zugrunde, eine Wickeljalousie bereitzustellen, die über die gesamte Höhe einer Gebäudewand, eines im wesentlichen senkrechten Dachelements oder dgl. von oben nach unten geöffnet werden kann und bei welcher sich beim öffnen keine unkontrolliert abgelegten Jalousiebereiche bilden sowie keine zu hohen Zugspannungen auftreten können.

Diese Aufgabe wird durch die Merkmale des Anspruchs 1 gelöst.

In den Unteransprüchen sind vorteilhafte und zweckmäßige Weiterbildungen der erfindungsgemäßen Wickeljalousie angegeben.

Die Erfindung geht von einer Wickeljalousie zur Lüftung von Gebäuden über eine oder mehrere an einer Gebäudewand, an einem im wesentlichen senkrechten Dachelement oder dgl., vorgesehene Öffnung(en) aus, die ein flächiges, flexibles Abdeckelement, z. B. eine Gewebefolie, zur zumindest teilweisen Abdeckung der einen oder mehreren Öffnung(en) im geschlossenen Zustand, ein von einer Antriebseinheit getriebenes Wickelelement zum Einstellen der Abdeckfläche der Abdeckung, mit welchem beginnend am unteren Rand des Abdeckelements das Abdeckelement in dessen unteren Bereich aufwickelbar ist sowie eine Nachführeinheit umfasst, die abhängig vom Aufwickelfortschritt den oberen Rand des Abdeckelements absenkt. Der Kern der Erfindung liegt nun darin, dass die Antriebseinheit ortsfest, das Wickelelement jedoch frei beweglich am Abdeckelement aufgehängt ist, wobei die Verbindung von Antriebseinheit und Wickelelement derart ausgelegt ist, dass eine Änderung der vertikalen Höhenposition des Wickelelements beim Aufwickelvorgang ausgeglichen werden kann. Auf diese Weise werden nicht nur hohe Zugspannungen in der Wickeljalousie für den Fall vermieden, dass das Absenken des Abdeckelements mit einer geringeren Geschwindigkeit als das Aufwickeln durchgeführt wird, sondern auch für den umgekehrten Fall eine Sackbildung verhindert, dass das Absenken durch die Nachführeinheit mit einer höheren Geschwindigkeit als der Aufwickelvorgang erfolgt. Diese Maßnahme hat darüber hinaus den Vorteil, dass die Spannung im Abdeckelement unabhängig zum Wickelzustand im Wesentlichen durch das Gewicht des Wickelelements bestimmt wird.

Für die Bereitstellung einer besonders zweckmäßigen Verbindung zwischen Antriebseinheit und Wickelelement wird darüber hinaus vorgeschlagen, dass das Wickelelement mit der Antriebseinheit über eine Teleskopgelenkkupplung verbunden ist.

In einer weiteren besonders bevorzugten Ausführungsform der Erfindung umfasst die Nachführeinheit eine Seilzugvorrichtung mit wenigstens einer Seiltrommel, die ebenfalls von der Antriebseinheit für das Wickelelement angetrieben wird. Dies stellt eine vergleichsweise kostengünstige und robuste Ausführungsform zur Realisierung der Nachführeinheit dar. In diesem Zusammenhang ist es überdies bevorzugt, wenn die Seilzugvorrichtung mehrere Umlenkrollen und Zugseile, die mit dem oberen Rand des Abdeckelements verbunden sind, beinhaltet.

In einer alternativen Ausführungsform ist es dabei besonders vorteilhaft, wenn die Seilzugvorrichtung eine Antriebsstange umfaßt, auf welcher wenigstens zwei Seiltrommeln angeordnet sind, von welchen Zugseile ausgehen, die direkt mit dem oberen Rand des Abdeckelements verbunden sind.

Um einen möglichst synchronisierten Vorgang für das Absenken und Aufwickeln des Abdeckelements zu gewährleisten, wird im Weiteren vorgeschlagen, daß die Seiltrommel und das Wickelelement im Wesentlichen denselben Aufwickeldurchmesser aufweisen.

Besonders vorteilhaft ist die Weiterbildung der Erfindung dahingehend, daß die wenigstens eine Seiltrommel eine konische Wickeloberfläche besitzt. Die Dimensionierung des Konus sollte derart sein, daß durch den Konus die Durchmesserzunahme des aufgewickelten Abdeckelements auf dem Wickelelement durch eine entsprechende erhöhte Seilzugabe zur Absenkung des oberen Randes des Abdeckelements ausgeglichen wird. D. h. das Zugseil ist nebeneinander liegend auf dem Konus aufgewickelt, so daß beim beginnenden Absenkvorgang zunächst von einem kleinen Durchmesser abgewickelt wird, der entsprechend des Konusverlaufes stetig zunimmt.

Um eine Automatisierung der Wickeljalousie zu ermöglichen, wird darüber hinaus vorgeschlagen, daß die Antriebseinheit einen Elektroantrieb vorzugsweise mit Endschalter und Selbsthemmung umfaßt.

Schließlich wird zur Bereitstellung einer kostengünstigen und einfachen Ausführungsform vorgeschlagen, daß als Wickelelement ein aus einem oder mehreren Einzelrohr(en) bestehendes Rohrelement vorgesehen ist, dessen Länge wenigstens der Breite des Abdeckelements entspricht.

### Zeichnungen

Vier Ausführungsbeispiele der Erfindung sind in den Zeichnungen dargestellt und in der nachfolgenden Beschreibung unter Angabe weiterer Vorteile und Einzelheiten näher erläutert. Es zeigen:
- Fig. 1: die schematische Darstellung einer ersten erfindungsgemäßen Wickeljalousie in einer Frontansicht,
- Fig. 2 + 3: die Ausführungsform gemäß Fig. 1 mit unterschiedlichen Antriebsvarianten und
- Fig. 4: eine vierte Ausführungsform, bei welcher ein zentrales Zugseil der Nachführeinrichtung durch eine Antriebsstange ersetzt ist.

### Beschreibung der Ausführungsbeispiele

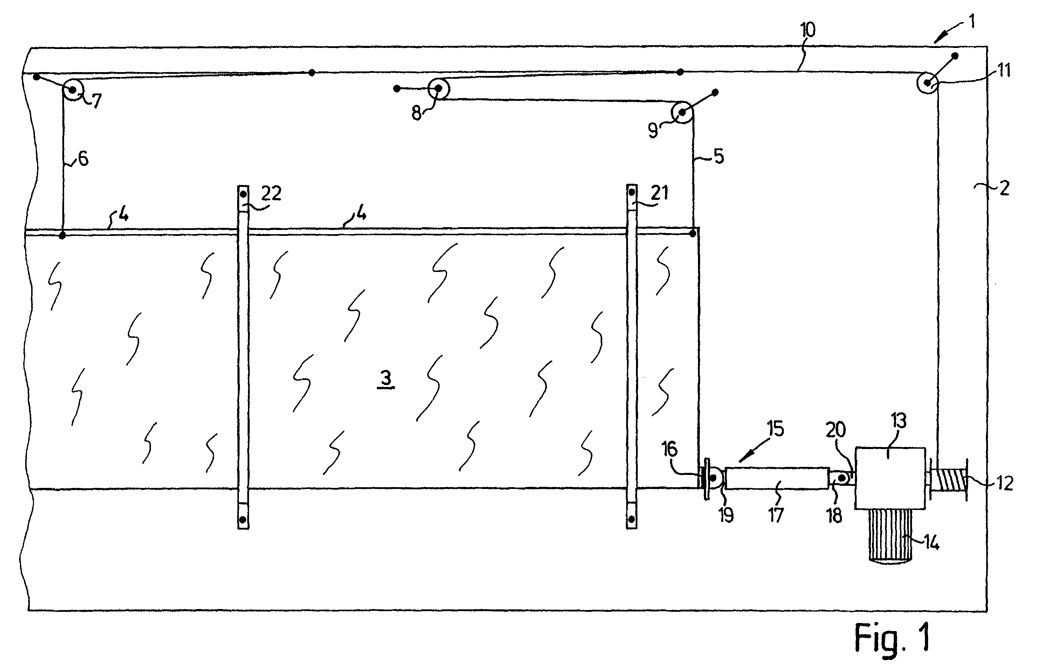

In Fig. 1 ist ein erstes erfindungsgemäßes Ausführungsbeispiel einer Wickeljalousie 1 an einer Gebäudewand 2 montiert, ausschnittsweise dargestellt. Die Wickeljalousie 1 umfaßt als Abdeckelement für eine Wandöffnung (nicht dargestellt) z. B. eine rechteckförmige Gewebefolie 3, an deren oberen Rand in einer Folientasche zur Versteifung des Randbereichs ein Rohr 4 über die gesamte Breite der Gewebefolie 3 eingeschoben ist. In diesem Bereich sind Zugseile 5, 6 befestigt, die über Umlenkrollen 7, 8, 9 mit einem Hauptzugseil 10 in Verbindung stehen, das über eine weitere Umlenkrolle 11 auf einer Seiltrommel 12 aufgewickelt wird. Die Seiltrommel 12 wird über eine Getriebeinheit 13 von einem Elektromotor 14 angetrieben.

Der Elektromotor 14 treibt über die Getriebeeinheit 13 und eine Teleskopgelenkkupplung 15 auch ein am unteren Rand der Gewebefolie 3 angebrachtes Wickelrohr 16 aus z. B. Aluminium an.

Das Wickelrohr 16 und die Seiltrommel 12 haben im Wesentlichen den gleichen Durchmesser, so daß in dem Maße, wie die Gewebefolie 3 auf dem Wickelrohr 16 aufgewickelt wird, durch Abwickeln des Hauptzugseils 10 von der Seiltrommel 12 sich der obere Rand der Gewebefolie 3 nach unten absenkt.

Mit zunehmendem Aufwickelfortschritt erhöht sich die Aufwickelgeschwindigkeit auf dem Wickelrohr 16, da der Durchmesser des darauf sich bildenden Folienwickels immer größer wird. Die Abwickelgeschwindigkeit des Hauptzugseils 10 von der Seiltrommel 12 nimmt hingegen regelmäßig nicht im gleichen Maße zu, wodurch sich die Position des Wickelrohrs 16 in vertikaler Richtung leicht erhöht. Diese Wegdifferenz führt jedoch nicht zu zerstörerischen Zugspannungen in der Wickeljalousieanordnung, sondern wird von der Teleskopgelenkkupplung 15 ausgeglichen. Diese erlaubt eine vertikale Erhöhung oder Absenkung des Wickelrohrs 16, ohne daß eine horizontale Positionsänderung des Wickelrohrs 16 eintritt, indem sich die Teleskopgelenkkupplung 15 entsprechend verlängert oder verkürzt. Der vertikale Versatz des Wickelrohres 16 zu einer Antriebswelle 20 der Getriebeeinheit 13 wird problemlos durch die an beiden Enden eines Teleskopstücks 17 der Kupplung 15 angeordnete Gelenkstücke 18, 19 ausgeglichen.

Um außerdem zu vermeiden, daß sich die Gewebefolie mit Zugseilen 5, 6, Wickelrohr 16 und Teleskopgelenkkupplung 15 von der Wand bzw. Wandöffnung wegbewegt, sind z. B. Sicherungsbügel 21 und 22 vorgesehen, ebenfalls denkbar sind Abspannseile oder dgl.

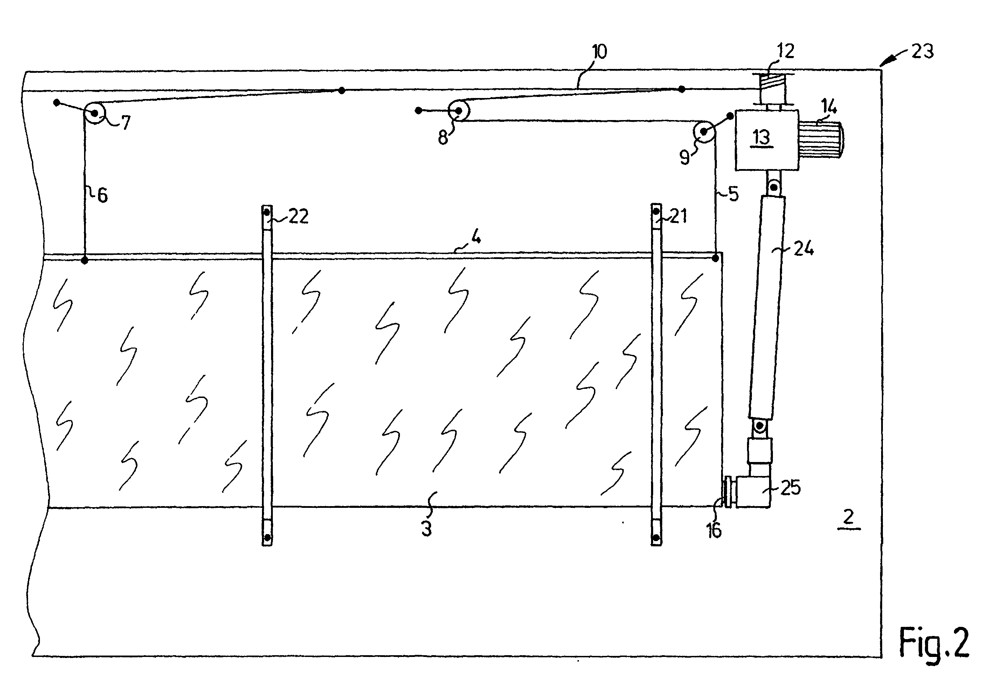

Bei den in Fig. 2 bis 4 dargestellten Varianten der erfindungsgemäßen Wickeljalousie nach Fig. 1 sind gleichartige Bauteile mit gleichen Bezugszeichen versehen.

Die Wickeljalousie 23 gemäß Fig. 2 unterscheidet sich von der Wickeljalousie gemäß Fig. 1 durch die in den Bereich des Hauptzugseils 10 verschobene Antriebseinheit 13, 14. Hierdurch kann das Hauptzugseil 10 direkt auf der Seiltrommel 12 aufgewickelt werden. Zum Antrieb des Wickelrohres 16 wird eine etwas längere Teleskopgelenkkupplung 24 und ein zusätzliches Winkelgetriebe 25 zwischen Teleskopgelenkkupplung 24 und Wickelrohr 16 eingesetzt.

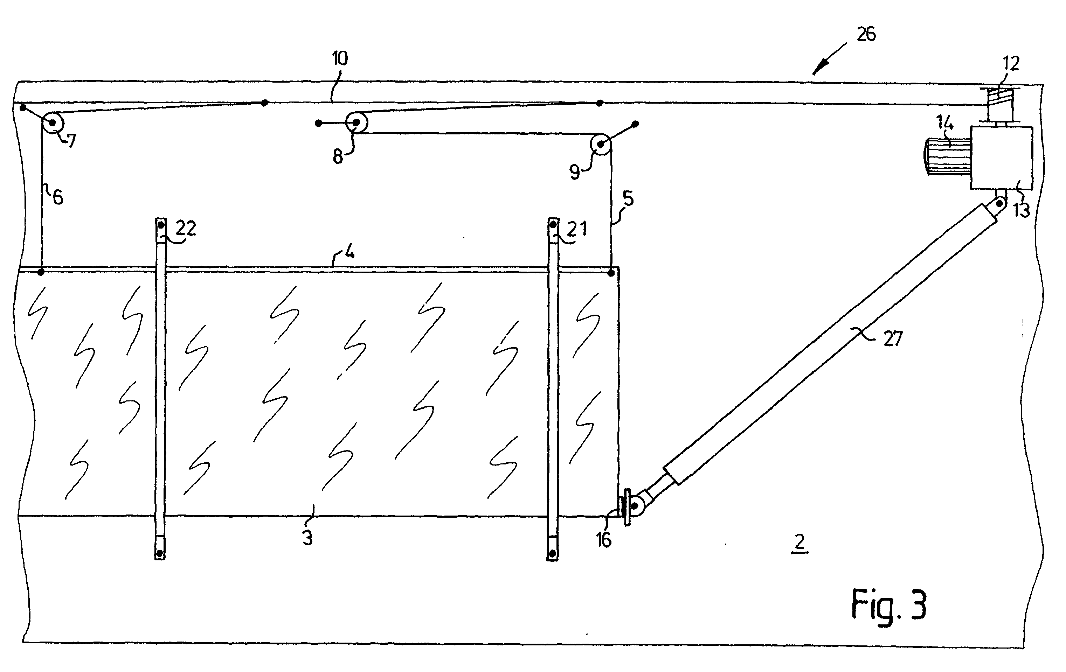

Bei der Wickeljalousie 26 gemäß Fig. 3 wurde die Antriebseinheit 13, 14, wie in Fig. 2 auf der Höhe des Hauptzugseils 10 angeordnet, jedoch weiter von der Gewebefolie 3 entfernt. Damit kann unter Verwendung einer noch längeren Teleskopgelenkkupplung 27 ein Winkelgetriebe eingespart werden.

Diese beiden Varianten sind besonders bei Nachrüstungen interessant, bei denen die Antriebseinheit bereits in dieser Position installiert ist bzw. im unteren Bereich keine Einbaumöglichkeit vorhanden ist.

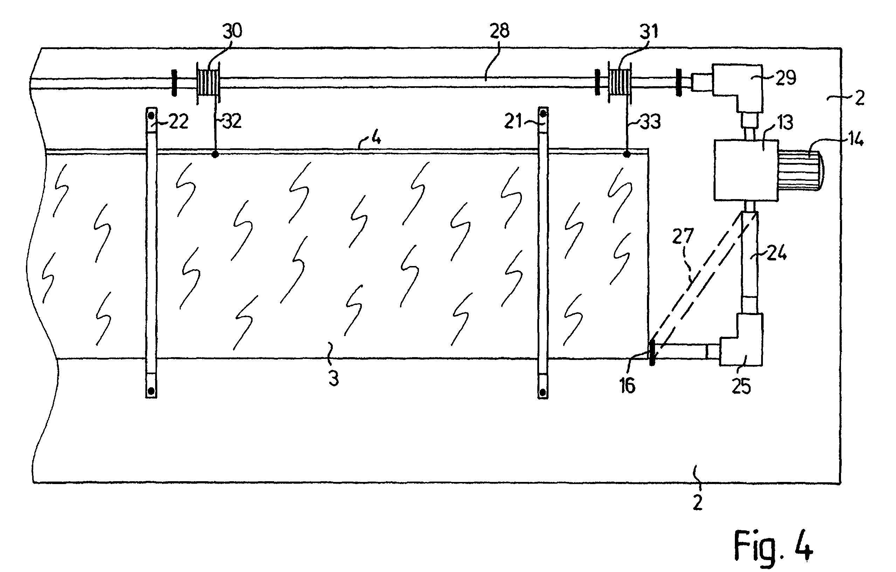

Die Ausführungsform, die in Fig. 4 dargestellt ist, entspricht im Wesentlichen einer Ausführungsform gemäß Fig. 2 oder 3, allerdings mit dem Unterschied, daß das Hauptzugseil 10 und die Seiltrommel 12 durch ein Rohr 28 ersetzt sind, das über ein Winkelgetriebe 29 mit der Getriebeinheit 13 und dem Elektromotor 14 verbunden ist. Auf dem parallel zur Gewebefolie 3 verlaufenden Rohr 28 sind Seiltrommeln 30, 31 fest positioniert, auf welchen Zugseile 32, 33, die am oberen Rand der Gewebefolie 3 verankert sind, ohne Umlenkung direkt aufgewickelt werden.

Diese Variante mit Rohr 28 ist zwar mechanisch aufwendiger als eine Ausführungsform mit Hauptzugseil, hat jedoch eine erhöhte Lebensdauer, insbesondere der Zugseile 32 und 33 zur Folge. Darüber hinaus fällt bei einem Seilriß anders wie bei einem Riß des Hauptzugseils nicht das ganze Abdeckelement 3 nach unten.

### Bezugszeichenliste:

- 1: Wickeljalousie
- 2: Gebäudewand
- 3: Gewebefolie
- 4: Rohr
- 5: Zugseil
- 6: Zugseil
- 7: Umlenkrolle
- 8: Umlenkrolle
- 9: Umlenkrolle
- 10: Hauptzugseil
- 11: Umlenkrolle
- 12: Seiltrommel
- 13: Getriebeeinheit
- 14: Elektromotor
- 15: Teleskopgelenkkupplung
- 16: Wickelrohr
- 17: Teleskopstück
- 18: Gelenkstück
- 19: Gelenkstück
- 20: Antriebswelle
- 21: Sicherungsbügel
- 22: Sicherungsbügel
- 23: Wickeljalousie
- 24: Teleskopgelenkkupplung
- 25: Winkelgetriebe
- 26: Wickeljalousie
- 27: Teleskopgelenkkupplung
- 28: Rohr
- 29: Winkelgetriebe
- 30: Seiltrommel
- 31: Seiltrommel
- 32: Zugseil
- 33: Zugseil

## Patentansprüche

1. Wickeljalousie zur Lüftung und/oder Verdunklung von Gebäuden über eine oder mehrere an einer Gebäudewand, an einem im wesentlichen senkrechten Dachelement oder dgl. vorgesehene Öffnung(en), umfassend ein flächiges, flexibles Abdeckelement zur mindestens teilweisen Abdeckung der einen oder mehreren Öffnung(en) im geschlossenen Zustand, ein von einer Antriebseinheit (13, 14) getriebenes Wickelelement (16) zum Einstellen der Abdeckfläche der Abdeckung, mit welchem beginnend am unteren Rand des Abdeckelements (3) das Abdeckelement in dessen unteren Bereich aufwickelbar ist sowie eine Nachführeinheit (5, 6, 7, 8, 9, 10, 12, 28, 29, 30, 31, 32, 33), die abhängig vom Aufwickelfortschritt den oberen Rand des Abdeckelements absenkt, **dadurch gekennzeichnet, dass** die Antriebseinheit (13, 14) ortsfest, das Wickelelement (16) jedoch insbesondere in vertikaler Richtung frei beweglich am Abdeckelement (3) aufgehängt ist, wobei die Verbindung von Antriebseinheit (13, 14) und Wickelelement (16) derart ausgelegt ist, dass eine Änderung der vertikalen Höhenposition des Wickelelements (16) beim Aufwickelvorgang ausgeglichen werden kann.

2. Wickeljalousie nach Anspruch 1, **dadurch gekennzeichnet, dass** das Wickelelement (16) mit der Antriebseinheit (13, 14) über eine Teleskopgelenkkupplung (15, 24, 27) verbunden ist.

3. Wickeljalousie nach einem der vorhergehenden Ansprüche, **dadurch gekennzeichnet, dass** die Nachführeinheit eine Seilzugvorrichtung (5 bis 11) mit wenigstens einer Seiltrommel (12, 30, 31) umfasst, die von der Antriebseinheit (13, 14) für das Wickelelement (16) angetrieben wird.

4. Wickeljalousie nach Anspruch 3, **dadurch gekennzeichnet, dass** die Seilzugvorrichtung mehrere Umlenkrollen (7, 8, 9, 11) und Zugseile (5, 6, 32, 33), an welchen der obere Rand des Abdeckelements (3) aufgehängt ist, beinhaltet.

5. Wickeljalousie nach Anspruch 3, **dadurch gekennzeichnet, dass** die Seilzugvorrichtung eine Antriebsstange (28) umfasst, auf welcher wenigstens zwei Seiltrommeln (30, 31) angeordnet sind, von welchen Zugseile ausgehen, die direkt mit dem Abdeckelement (3) verbunden sind.

6. Wickeljalousie nach einem der Ansprüche 3 bis 5, **dadurch gekennzeichnet, dass** die Seiltrommel (12, 30, 31) und das Wickelelement (16) im Wesentlichen denselben Durchmesser aufweisen.

7. Wickeljalousien nach einem der Ansprüche 3 bis 5, **dadurch gekennzeichnet, dass** die Seiltrommel eine konische Wickeloberfläche besitzt.

8. Wickeljalousie nach einem der vorhergehenden Ansprüche, **dadurch gekennzeichnet, dass** die Antriebseinheit einen Elektroantrieb (14) umfasst.

9. Wickeljalousie nach einem der vorhergehenden Ansprüche, **dadurch gekennzeichnet, dass** als Wickelelement (16) ein aus einem oder mehreren Einzelrohr(en) bestehendes Rohrelement vorgesehen ist, dessen Länge wenigstens der Breite des Abdeckelements (3) entspricht.

## Claims

1. Roller blind for airing and/or darkening buildings via one or more opening(s) provided on a building wall, on a substantially vertical roof component or the like, comprising a flat, flexible covering component for at least partial covering of the one or more opening(s) in the closed state, a winding element (16) driven by a drive unit (13, 14) for adjusting the covering area of the covering, with which, starting at the lower edge of the covering component (3), the covering component can be wound in its lower region and a guide unit (5, 6, 7, 8, 9, 10, 12, 28, 29, 30, 31, 32, 33) lowering the upper edge of the covering component depending on the progress of the winding, **characterised in that** the drive unit (13, 14) is stationarily attached but the winding element (16) is attached to the covering component (3) so as to be freely movable, in particular in the vertical direction, the connection of drive unit (13, 14) and winding element (16) being designed in such a way that a change in the vertical height position of the winding element (16) can be compensated during the winding process.

2. Roller blind according to claim 1, **characterised in that** the winding element (16) is connected to the drive unit (13, 14) via a telescopic articulated coupling (15, 24, 27).

3. Roller blind according to any one of the preceding claims **characterised in that** the guide unit comprises a cable pull device (5 to 11) with at least one cable drum (12, 30, 31) driven by the drive unit (13, 14) for the winding element (16).

4. Roller blind according to claim 3, **characterised in that** the cable pull device comprises a plurality of deflection pulleys (7, 8, 9, 11) and traction cables (5, 6, 32, 33) to which the upper edge of the covering component (3) is attached.

5. Roller blind according to claim 3, **characterised in that** the cable pull device comprises a drive rod (28) on which at least two cable drums (30, 31) are arranged from which traction cables directly connected to the covering component (3) issue.

6. Roller blind according to any one of claims 3 to 5, **characterised in that** the cable drum (12, 30, 31) and the winding element (16) have substantially the same diameter.

7. Roller blind according to any one of claims 3 to 5, **characterised in that** the cable drum has a conical winding surface.

8. Roller blind according to any of the preceding claims, **characterised in that** the drive unit comprises an electric drive (14).

9. Roller blind according to any of the preceding claims, **characterised in that** a tubular element consisting of one or more individual tube(s), the length of which corresponds to at least the width of the covering component (3), is provided as winding element (16).

## Revendications

1. Store pour aérer et/ou obscurcir des bâtiments par une ou plusieurs ouvertures prévues sur une paroi de bâtiment, sur un élément de toit généralement vertical ou analogue, comportant un élément de recouvrement plat, souple, pour recouvrir au moins partiellement une ou plusieurs ouvertures dans l'état fermé, un élément d'enroulement (16), entraîné par une unité d'entraînement (13, 14), pour régler la surface de recouvrement du recouvrement, grâce auquel, en commençant au bord inférieur de l'élément de recouvrement (3), l'élément de recouvrement peut être enroulé dans sa zone inférieure, ainsi qu'une unité de suivi (5, 6, 7, 8, 9, 10, 12, 28, 29, 30, 31, 32, 33) qui, de façon dépendant du progrès de l'enroulement, abaisse le bord supérieur de l'élément de recouvrement,
**caractérisé en ce que** l'unité d'entraînement (13, 14) est suspendue à l'élément de recouvrement (3) de façon fixe, mais l'élément d'enroulement (16) de façon librement mobile en particulier en direction verticale, la liaison de l'unité d'entraînement (13, 14) et de l'élément d'enroulement (16) étant telle qu'une modification de la position en hauteur verticale de l'élément d'enroulement (16) peut être compensée lors du processus d'enroulement.

2. Store selon la revendication 1,
**caractérisé en ce que** l'élément d'enroulement (16) est relié à l'unité d'entraînement (13, 14) par l'intermédiaire d'un accouplement à articulation télescopique (15, 24, 27).

3. Store selon une des revendications précédentes,
**caractérisé en ce que** l'unité de suivi comporte un dispositif à câble de traction (5 à 11) avec au moins un tambour à câble (12, 30, 31), qui est entraîné par l'unité d'entraînement (13, 14) pour l'élément d'enroulement (16).

4. Store selon la revendication 3,
**caractérisé en ce que** le dispositif à câble de traction comporte plusieurs rouleaux de renvoi (7, 8, 9, 11) et câbles de traction (5, 6, 32, 33) auxquels le bord supérieur de l'élément de recouvrement (3) est suspendu.

5. Store selon la revendication 3,
**caractérisé en ce que** le dispositif à câble de traction comporte une tige d'entraînement (28), sur laquelle sont agencés au moins deux tambours à câble (30, 31), desquels partent des câbles de traction, qui sont reliés directement à l'élément de recouvrement (3).

6. Store selon une des revendications 3 à 5,
**caractérisé en ce que** les tambours à câble (12, 30, 31) et l'élément d'enroulement (16) présentent généralement le même diamètre.

7. Store selon une des revendications 3 à 5,
**caractérisé en ce que** le tambour à câble possède une surface d'enroulement conique.

8. Store selon une des revendications précédentes,
**caractérisé en ce que** l'unité d'entraînement comporte un entraînement électrique (14).

9. Store selon une des revendications précédentes,
**caractérisé en ce que**, comme élément d'enroulement (16), il est prévu un élément tubulaire constitué d'un ou plusieurs tubes individuels, dont la longueur correspond au moins à la largeur de l'élément de recouvrement (3).
